(19) **Europäisches Patentamt / European Patent Office / Office européen des brevets**

(11) **EP 2 486 272 B1**

(12) **EUROPEAN PATENT SPECIFICATION**

(45) Date of publication and mention
of the grant of the patent:
**23.03.2016 Bulletin 2016/12**

(21) Application number: **10765998.9**

(22) Date of filing: **01.10.2010**

(51) Int Cl.:
*F03D 7/02* (2006.01)　　*F03D 7/04* (2006.01)
*G05B 13/02* (2006.01)　　*H02P 9/04* (2006.01)

(86) International application number:
**PCT/EP2010/064666**

(87) International publication number:
**WO 2011/042369 (14.04.2011 Gazette 2011/15)**

(54) **CONTROL METHOD FOR A WIND TURBINE**

METHODE ZUR REGELUNG EINER WINDTURBINE

PROCÉDÉ DE COMMANDE D'ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:　**08.10.2009　DK 200901106**
　　　　　　　**08.10.2009　US 249885 P**
　　　　　　　**18.06.2010　DK 201070274**
　　　　　　　**18.06.2010　US 356179 P**

(43) Date of publication of application:
**15.08.2012 Bulletin 2012/33**

(73) Proprietor: **Vestas Wind Systems A/S
8200 Aarhus N (DK)**

(72) Inventors:
• **ANDERSEN, Asger Svenning
DK-8830 Tjele (DK)**
• **THOMSEN, Jesper Sandberg
DK-8370 Hadsten (DK)**

• **MIRANDA, Erik Carl Lehnskov
DK-8900 Randers (DK)**
• **ABDALLAH, Imad
DK-8000 Århus C (DK)**
• **CHRISTENSEN, Poul Brandt
DK-8680 Ry (DK)**
• **ZAIB, Ali
DK-9000 Ålborg (DK)**
• **BACHMANN, Thomas Tvilum
DK-9000 Ålborg (DK)**

(74) Representative: **Vestas Patents Department
Hedeager 42
8200 Aarhus N (DK)**

(56) References cited:
**WO-A1-2007/123552　　WO-A2-2009/026930
US-A- 4 474 531　　　　US-A1- 2007 057 517
US-A1- 2009 060 740　　US-A1- 2009 224 542**

**Description**

**Field of the invention**

The presents invention relates to a strategy for controlling and regulating the different controllable parameters of a wind turbine during operation with a view to reducing extreme loads acting on the wind turbine components.

**Background**

Most modern wind turbines are controlled and regulated continuously with the purpose of ensuring maximum power extraction from the wind under the current wind and weather, while at the same time ensuring that the loads on the different components of the wind turbine are at any time kept within acceptable limits. Desirably, the wind turbine may also be controlled to account for fast local variations in the wind velocity - the so-called wind gusts, and take into account the dynamic changes in the loads on the individual blades due to e.g. the blades passing of the tower, or the actual wind velocity varying with the distance to the ground (the wind profile).

For this purpose a number of parameters are collected and monitored by the controllers in a wind turbine, such as the current wind speed and direction, the wind shear and turbulence, the rotational speed of the rotor, the pitch angle of each blade, the yaw angle, information on the grid system, and measured parameters (e.g. stresses or vibrations) from sensors placed e.g. on the blades, the nacelle, or on the tower.

Based on these and following some control strategy the optimal control parameters of the turbine in order to perform optimally under the given conditions are determined. The methods of controlling the current performance, and thereby the power production and the load situation of the wind turbine, include for instance pitching of the blades, adjusting any other active aerodynamic devices for changing the aerodynamic surfaces of the blades such as flaps or vortex generating means, adjusting the power, and/or adjusting the rotational speed of the rotor. These parameters are here and in the following referred to as controllable parameters.

The above-mentioned address power production, but not the thrust force exerted on the rotor. That is, the nominal operating points inherently ensure that the thrust force is kept within design limits at the stationary operating points but problems inherently arise when dynamic effects are considered. For instance due to the generator speed-based pitch control being quite a slow-acting system, gusty wind conditions can lead to events where the pitch controller is not able to follow the steep slopes of the wind speed. In effect, the rotor will accelerate away from the stationary operating point, eventually exceeding the overspeed limit and thus initiating an emergency shutdown. Such emergency shutdowns will, in some cases, cause load problems due to negative thrust being applied on the rotor.

Excessive loads can, however, also occur during the rotor acceleration *leading* to the overspeed situation. This is basically caused by the fact that the controller of the operational parameters of the wind turbine such as the pitch controller is either not designed to react on fast changing wind conditions or is not fast enough to compensate for the increased wind speed. Therefore, the thrust coefficient is not lowered fast enough to compensate for the increased wind speed. As a result, the tower is deflected backwards with the result of excessive bending moments in the tower base.

Further, sudden or abrupt changes in the wind conditions such as drops in the wind speed and large wind direction changes etc., may, if the control strategy of the wind turbine is not determined or executed fast enough, result in very high and unacceptable loads and moments in some of the components of the wind turbines, e.g. in the tower due to an undesirable pitching of one or more of the blades, or in the gears due to erroneous adjustments of the power. Such loads may be of considerable sizes and may in the worst case scenario in the extreme situations or over time lead to fatal damage of the turbine. Irrespective that the probability for such extreme situations arising be minimal, the possible implications are unacceptable, creating the need for fail-safe control methods capable of preventing these possibly rare but extreme eventualities.

Examples of extreme wind load conditions are prescribed in the IEC 61400 code and comprise among others the Extreme Operating Gust (EOG) load case, the Extreme Coherent gust with Direction change (ECD) load case, the Extreme Direction Change, the Extreme Coherent Gust (ECG), and the Extreme Wind Shear (EWS) load case.

Known controlling systems comprise using a measured or estimated wind speed and/or detecting the wind direction using a wind vane directly to determine the controllable parameters. However, such systems have in some situations and especially in extreme wind conditions turned out to be too slow or too inaccurate to detect the wind load condition changes in due time for the turbine to perform optimally, and may therefore be insufficient and in some cases even inadequate to protect the turbine.

One control system is known from US 2009/0060740 A1.

**Summary of the invention**

It is therefore an object of embodiments of the present invention to provide a control method for a wind turbine which obviate or reduce some of the above mentioned problems in known controlling methods.

It is a further object of the invention to provide a control method which in a simple and effective way may react faster and more reliable to changes in the wind load conditions, especially to sudden or large changes in the wind direction, wind shear, and/or wind speed.

A further object of embodiments of the present invention is to provide a control system or a control method capable of taking dynamic effects of the wind such as gusts or turbulence into account in the controlling of the operational parameters of wind turbine.

In accordance with the invention this is obtained by a method according to claim 1.

The control method according to the invention hence comprises a control signal supervision strategy for avoiding severe or extreme load situations on a wind turbine, where an operational parameter representing a loading on the wind turbine exerted by the wind is determined at each time step, and the variations in time hereof are used as a basis for deciding whether the wind turbine should be controlled differently, for instance stopping the turbine if some alert threshold is exceeded.

By the operational parameter representing a loading on the wind turbine rotor exerted by the wind is meant that there is a one to one relationship between the operational parameter and the loading on the wind turbine rotor, such that changes in the loading are directly reflected in corresponding changes in the operational parameter.

In an embodiment of the invention the step of estimating the operational parameter comprises estimating at least one of a rotor power coefficient, a torque coefficient and a thrust coefficient of the wind turbine.

The hereby obtained control method is advantageous in acting as a system detecting and reacting on large changes or variations in the wind load conditions in a simple yet effective way, which wind condition changes may otherwise lead to severe or even extreme load situations in different wind turbine components such as the tower, the blades, the generator, the gears etc. In worst case scenarios such extreme loads may result in fatal damage of the wind turbine, as e.g. ultimately result in breaking of the tower, and are therefore unacceptable. The supervision according to the control method ensures in a simple yet effective manner that the risk of extreme load situations and loads leading to fatigue damage is greatly reduced or even avoided by overruling the controlling otherwise decided on, and by following a modified control strategy instead in the case of large variations in the rotor power, torque, and/or thrust coefficient found to reflect large changes in the wind load conditions, e.g. by de-rating, shutting down the wind turbine completely, or increasing the pitch reference.

The hereby obtained control method is further advantageous in providing a control scheme for a wind turbine reducing the tower vibrations and the extreme tower loads, especially the extreme bending moments near the tower base.

The control method is further advantageous in acting as an event based system in that the turbine may be controlled unaffected according to its conventional control strategy (typically with a view to maximizing the energy production of the turbine), unless the current loading and/or change in loading of the wind turbine dictates the controlling to be advantageously modified.

The wind load conditions may include average and/or absolute wind speed, wind shear, wind direction, in particular relative to the rotor plane, areas of wind shade, wind field variations, turbulence factor etc.

It is an advantage of the method of the present invention that it can be readily applied to existing wind turbines without the requirement of additional components or hardware equipment.

As briefly mentioned in the introduction, the controllable parameter may for instance comprise the individual or collective pitching of the blades, the yaw, or coning of the rotor, the rotational speed of the rotor, the power, the generator speed, or some adjusting parameters for any other active aerodynamic devices for changing the aerodynamic surfaces of the blades such as flaps or vortex generating means.

The control signal may comprise a power or torque reference signal for controlling the rotational speed of the wind turbine rotor by changing the power or torque.

The control signal may alternatively or additionally comprise a pitch reference signal for controlling the pitching of the blades of the wind turbine. The pitch reference signal may comprise the value of the pitch reference for each individual wind turbine blade, and/or the value of the collective pitch reference, so that the control method may be performed on each of the individual blade pitch references and/or on the mean (the collective pitch reference) of these.

The step of determining a control signal for a controllable parameter may be performed in the same or in different controllers and based on input from various sensors such as load sensors on the blades or rotor shaft, accelerometers in the nacelle, anemometers etc. The control signal (e.g. a pitch reference) may in this way be determined by the controller according to other control strategies taking into account for instance the tilt-yaw control of the turbine, the adjustment of the pitch yielding the maximal power output for the given wind speed, individual pitching taking the wind shear and/or the tower shadow into account, pitching to adjust the rotational speed, or to decrease the tower vibrations etc.

The estimating of the one or more operational parameters representing a loading on the wind turbine may comprise estimating or measuring any parameter representing the incoming wind power or the blade load level, such as measuring the stresses or strains on the blades, measuring the deformation of the blades, measuring the acceleration of the rotor, the generator speed, the generator power, the distance between the blade and the tower, and/or the acceleration of the nacelle or the tower.

In a further embodiment of the invention the step of estimating the operational parameter comprises estimating at least one of a rotor power coefficient, a torque coefficient, and/or a thrust coefficient of the wind turbine.

Alternatively or additionally, the estimating of the operational parameter may comprise estimating the thrust force on the rotor, and/or a thrust limiter pitch angle expressing the minimum pitch angle for maintaining the thrust on the wind turbine below or at a maximum allowable thrust level. The thrust limiter pitch angle (also referred to in the following as the minimum pitch limit) may therefore be determined as the pitch angle ensuring that the thrust force is below a specified limit. The thrust expresses the axial force on the wind turbine rotor from the wind and transferred from the rotor blades and the rotor to the nacelle and directed along the axis of rotation of the rotor. The thrust may be positive or negative at different times during the operation of the wind turbine and may be determined as a function of the wind speed, the pitch angle of the rotor blades, and the rotor (or generator) rotational speed.

By the proposed control method is obtained that the initiating of the modified control may be independent of the current pitch and indifferent to the currents loads on the wind turbine. Rather, the modified control strategy is initiated in dependence on the sudden changes or abnormal fluctuations in the wind load situation.

The minimum pitch limit value of the pitch reference value may be determined as a function of the power produced by the rotation of the rotor and a rotational speed of the rotor. As it can be shown that the pitch angle for a given thrust value and a given rotor rotational speed is a linear function of the rotor power, the minimum pitch limit value of the pitch reference value may be determined from these relationship and as a function of the variation parameter either directly or indirectly by first determining the thrust value as the maximum allowable thrust level from the variation parameters. The minimum pitch limit value may hence be determined readily and fast for instance from a set of predetermined curves or equations yielding the above mentioned relationship between the minimum pitch and the rotor power for different rotor rotational speeds and thrust levels.

Alternatively or additionally, the maximum allowable thrust on the rotor may be determined as a function of the variation of e.g. the turbine blade loads or the rotor acceleration.

The minimum pitch limit value of the pitch reference value may be estimated to generally increase for increasing maximum allowable rotor thrust and for increasing rotor or generator power and for increasing rotational speed of the rotor. The minimum pitch limit may be estimated to depend linearly or piecewise linearly on the maximum allowable rotor thrust, the rotor or generator power, and/or the rotor rotational speed.

Alternatively or additionally, the maximum allowable thrust on the rotor may be determined as a function of a mean wind speed on the rotor. The maximum allowable thrust may be based on sets of thrust curves or data sets and as a function of the mean wind speed and variations of e.g. blade loads and/or rotor acceleration. These curves or data sets may be determined off-line from the linkage between the estimated fatigue load, the wind speed and the maximum allowable thrust, and may be obtained e.g. from numerical simulations. The curves or data sets may be established during the design and construction of the wind turbine such as to yield the desired power production by the wind turbine and over the desired life time. The curves or data sets may optionally be updated during operation of the wind turbine. The wind speed used may be a measured or an estimated wind speed and may be a mean wind speed for instance determined as the average wind speed over the rotor area or as the average between a maximum and a minimum wind speed.

Alternatively or additionally the maximum allowable thrust may be determined from predetermined look-up tables yielding an effective and fast method for establishing or estimating the maximum allowable thrust.

In an embodiment of the invention, the maximum allowable rotor thrust may be estimated to generally decrease by increasing variation of the operational parameter and by decreasing wind speeds. The maximum allowable rotor thrust may be estimated to depend linearly or piecewise linearly on the variation of the operational parameter and/or the wind speed. In a more simple estimation of the maximum allowable rotor thrust, the variation of the operational parameter may be estimated to be independent of the wind speed, such that the maximum allowable rotor thrust may be estimated as a function of the variation of the operational parameter only.

The angular acceleration of the rotor may be determined by means of sensors measuring the speed of the high speed shaft on the generator side of the gear. The blade loads may be measured by means of strain gauges or optical fibres placed on or in one or more of the wind turbine blades for instance in the root of the blade.

The time intervals at which the operational parameter and its variation are determined may vary according to need and can for instance be determined continuously or at varying interval lengths dependent for instance on the turbulence conditions, on the current wind direction, on the ambient temperature etc.

According to an embodiment of the invention, the variation of an operational parameter representing a loading on the wind turbine and thus directly related to the thrust level on the rotor and the tower such as e.g. the variation of the thrust limiter pitch, the rotor power, torque, and/or thrust coefficients of the wind turbine are used to determine which control strategy should be employed. This is advantageous in that such parameters are characteristic of the wind turbine and are found to reflect changes in the wind load conditions, such as turbulence, gusts, abrupt changes caused by weather front passages, wind shear, and wind direction changes with or without simultaneous changes in the wind speed.

A possible explanation for the advantage in using the rotor power, torque and/or thrust coefficients may be that these coefficients comprise less noise as they reflect the total rotor power, torque, or thrust averaged spatially and not only in a single or a few spatial points. The coefficients hence are not disturbed by local fluctuations to the same degree as e.g. wind vane measurements and are further not averaged over time whereby they may reflect the changes in the wind load conditions earlier or faster. Measurements of the wind directions from a wind vane on the contrary will fluctuate due to the rotor and nacelle movements, are will therefore need to be filtered resulting in a delay, adding to make a wind turbine control based hereon slower. A control method based directly on the measured or estimated wind speed may similarly be inaccurate and unsuitable, as the controlling is then based on the wind speed in one point in space only and as changes to this one parameter may not reflect similar changes in the overall wind speed.

Furthermore, the control method according to the invention is advantageous as the changes in the operational parameter (e.g. the thrust limiter pitch, the rotor power, torque, or thrust coefficients) may be detected very early time wise compared to conventional supervision methods based on e.g. wind vane and direct wind speed measurements. Thereby the wind turbine control method may react faster to sudden or extreme changes in the wind load conditions, which may give the time needed for the chosen control strategy to actually be effectuated on the wind turbine in time to avoid the undesirable high loads and moments otherwise resulting from yaw-errors, even for large wind turbines where the control may be relatively slow due to the very long blades, heavy components etc.

The control method according to the invention is further advantageous in leaving the wind turbine control unaffected during normal operation, whereby the normal operation mode is left undisturbed and the power produced by the wind turbine is not unnecessarily reduced in non-critical wind load conditions.

Further, the control method according to the invention is advantageous in taking into account the derivatives and the second order effects of the loads on the wind turbine rotor and therefore accounts for situations where the turbulence is high but where the mean thrust may be acceptable anyhow.

It is an advantage of the method of the present invention that it can be readily applied to existing wind turbines without the requirement of additional components or hardware equipment.

In addition to the controlling of the blade pitch, other controllable parameters of the turbine may be controlled simultaneously or in parallel such as e.g. the yaw or coning of the rotor, the rotational speed of the rotor, the power, the torque, the generator speed, or some adjusting parameters for any other active aerodynamic devices for changing the aerodynamic surfaces of the blades such as flaps or vortex generating means.

The modified control strategy may in one embodiment of the invention comprise stopping or de-rating the wind turbine whereby the undesirable large loads otherwise resulting from the severe wind load conditions are effectively and in a simple way avoided and prevented. A de-rating control strategy may e.g. include a reduction of the power reference, a reduction of the rotational speed, collective blade pitching out of the wind (optionally combined with individual pitching of the blades) or a combination of any of these control schemes. Stopping may be achieved e.g. gradually or step wise slowing the turbine down to a halt, or by pitching the blades completely out of the wind.

Further, the modified control strategy may comprise controlling the wind turbine according to the control signal prior to the most recent control signal, whereby the wind turbine is controlled in a safe mode and the undesirable extreme loads otherwise resulting from the severe wind load conditions are effectively prevented without largely influencing the productivity of the wind turbine.

In a further embodiment, the modified control strategy comprises adding a modification parameter to the value of the control signal. Hereby is obtained that the control signal may be modified fast and dynamically reducing the effective thrust force exerted on the rotor and the tower effectively. The modified control strategy is further advantageous in that the tuning or adjusting of the control signal is only activated when needed - generally at high turbulence thereby avoiding peak loads on especially the blades and the tower. Further, in these situations when the modified control strategy is activated, the wind turbine is not simply stopped or de-rated but instead controlled in a manner to reduce the fatigue and damage on the rotor while maintaining a power production of the wind turbine.

The control signal may as also previously mentioned comprise a pitch reference signal for controlling the pitching of the blades of the wind turbine, and the modified control strategy may comprise increasing the value of the pitch reference signal. By increasing the pitch of the turbine blades the aerodynamical thrust on the rotor and the tower and thereby the blade moments, the tower tilt and bending moments are directly and effectively decreased.

The modification parameter may be a predetermined constant or may be a function of the value of the operational parameter at the time when controlling according to modified control strategy. This operational parameter may be the one used for activating the control strategy. The modification parameter may further be a function of the value of another operational parameter. Hereby may be obtained that the control signal such as e.g. the pitch may be modified in an amount depending on for instance the current wind load conditions. In this way the control signal may be changed more abruptly in more severe wind load conditions leading to higher and more critical loads on the wind turbine components.

The rotor power coefficient expresses how efficiently the wind turbine converts the wind energy into power and is given as the ratio of the power extracted by a wind turbine to the power available in the wind stream. The torque coefficient may be expressed in terms of the rotor power coefficient divided by the blade tip ratio.

The operational parameter such as the rotor power coefficient, the torque coefficient, and the thrust coefficient of the wind turbine may be determined from a pitch angle of one or more of the wind turbine blades, from the generator speed, the rotor speed, and/or the rotor or generator power.

Similarly, the thrust limiter pitch may be determined from the rotor or generator power, from a given maximum allowable thrust and the rotational speed of the rotor or generator.

Further, the operational parameters may be determined from the wind speed either as estimated or as measured directly. Also, the operational parameters may partly be determined by looking up in predetermined tables. The operational parameters including the thrust limiter pitch, rotor power coefficient, the torque coefficient, and the thrust coefficient may hence in most cases be determined from already available information with no need for additional sensors on the wind turbine.

In an embodiment of the invention the variation parameter is determined by filtering the at least one operational parameter such as the thrust limiter pitch, the rotor power coefficient, the torque coefficient, and the thrust coefficient of the wind turbine. Hereby a variation parameter expressing the time wise variation of one or more of the coefficients is obtained which may be realised in existing control systems by simple means optionally by upgrading of existing systems and without the need for additional measurements. Different types of filters may be employed such as fast and slow low pass filters, 1st or higher orders filters, a Kalman filter or by the application of Fast Fourier transformation.

Alternatively or additionally the variation parameter reflecting a variation of the operational parameter may be determined as a function of the mean value and/or the standard deviation and/or the variance of the parameter, from a rain flow count algorithm, or by similar data processing measures reflecting the fluctuation of the parameter over time.

In a further embodiment of the invention the variation parameter is determined as a function of the difference between a fast and a slow low pass filtered operational parameter, such as the thrust limiter pitch, the rotor power efficiency, torque coefficient, and/or thrust coefficient. Therefore, an effective measure for the time dependent variation of the one or more parameters in question is obtained by a simple algorithm.

The variation parameter in this way reflects a sudden or abrupt change of the coefficient in question. Such variation parameter expressing the time wise variation of the operational parameter may be realised in existing control systems by simple means optionally by upgrading of existing systems and without the need for additional measurements.

In an embodiment of the invention the variation parameter is determined as a function of a pitch angle of one or more of the wind turbine blades, the acceleration of the wind turbine tower and/or the drive train speed of the wind turbine. Hereby the variation parameter may be tuned to more effectively reflect the changes in the wind load conditions, for instance with the purpose of tuning the variation parameter to e.g. avoid exceeding the alert threshold during normal operation of the wind turbine to a higher degree of certainty, or to tune the variation parameter to reflect specific changes in wind load conditions, e.g. be more sensitive to extreme wind direction changes than to extreme wind speed changes etc. For example, the variation parameter is more sensitive (and therefore more prone to cause a modified control strategy to be initiated) the more the blades are pitched into wind in which case an abrupt wind load condition change would also cause higher tilt and yaw moment than for blades pitched more out of the wind.

In an embodiment, the variation parameter could also be chosen to increase with value of the absolute or mean wind speed. Hereby a control method is obtained which in some situations reacts more promptly to large variations in the wind load conditions, where the possibility of the variation parameter exceeding the alert threshold is larger, and the wind turbine therefore is more likely to be controlled differently e.g. more conservatively, stopped or de-rated. This may for instance be advantageously at higher wind speeds, where the risk of unacceptable large or extreme loads and moments on the wind turbine is correspondingly higher than at lower wind speeds.

In an embodiment of the invention, the alert threshold is a predefined constant, may depend on the most recent control value, and/or may be a function of the wind speed.

The alert threshold may optionally be a function of the other parameters such as the current wind speed, a turbulence factor, acceleration measurements on the nacelle or the blades, the blade loads, the power production, the generator speed, or the current pitch of the blades, whereby the control method which in some situations reacts more promptly to large variations in the wind load conditions is obtained. In this way a control method where a modified control such as stopping or de-rating of the turbine is more likely could be applied in situations where the consequences of the large changes in wind conditions are more severe, for instance at higher wind speeds.

The present invention relates in another aspect to a control system according to claim 12.

Hereby a control system for a wind turbine is obtained which is capable of being controlled according to the previous control methods and with the advantages derived there from and as described in relation thereto.

Finally, the present invention relates in another aspect to a wind turbine according to claim 13.

The advantages of such wind turbine have already been described above in relation to the control method according to the embodiments.

The estimating of the one or more operational parameters representing a loading on the wind turbine may according to an embodiment of the invention comprise estimating or measuring the blade loads on one or more of the wind turbine blades. For instance, the blade loads may be measured in the root of each of the blades yielding a measure of the blade flapwise bending moments.

The variation parameter may then be determined as a function of the variation of the one or more blade loads such that the controlling of the wind turbine is modified if large drops in the blade loads are detected. As an example, the variation parameter may be determined by taking the highest blade load value occurring in the just passed time period such as for the last 5-10 seconds and subtracted the current load value. In case this load drop value exceeds a certain level or alert threshold the control strategy for the wind turbine is modified, Additionally or alternatively, the combined (i.e. the added) load drop for all the turbine blades may be considered as the variation parameter.

If activated, the modified control strategy may be upheld for a certain time such as for approximately 10-20 seconds, and/or may be upheld as long as the variation parameter is above the alert threshold.

As previously mentioned, the modified control strategy may comprise stopping or de-rating the turbine, or may comprise adding a modification parameter to the value of the control signal.

According to an embodiment a value is added to the individual pitch references, which value is proportional to the change in blade load for that particular blade. In this way the pitch reference is enlarged when the blade load is increasing. Assuming that a larger pitch angle leads to a reduced blade load, this proposed modified control strategy may result in the changes in the blade load being dampened.

According to a further embodiment, the individual pitch reference may be kept constant for some time (e.g. approximately 10-20 seconds).

## Brief description of the drawings

In the following different embodiments of the invention will be described with reference to the drawings, wherein:

Fig. 1 generally illustrates a wind turbine,

Fig. 2 illustrates a general control system of a wind turbine according to the present invention,

Fig. 3 shows wind parameters as a function of time during an extreme wind direction change and correspondent rotor efficiency and tilt moments for a wind turbine during a control strategy according to prior art,

Fig. 4 shows the same extreme wind load case as in figure 3,

Fig. 5 shows power, rotor power coefficients, and tilt moments resulting from a control strategy according to an embodiment of the invention and compared to the results from a conventional control strategy,

Fig. 6 illustrates the rotor power coefficient and filtered values hereof during a time series with normal production,

Fig. 7 is a flow-chart illustrating an embodiment of the control method,

Fig. 8 shows the minimum acceptable pitch angle $\theta_{min}$ as a function of the rotor power $P_{rotor}$ at four different rotational speed co and for a given constant maximal thrust,

Fig. 9 shows wind speed, the pitch modification parameter, the resulting pitch, and tower bending moment during a gust and resulting from a control strategy with and without pitch modification according to an embodiment of the invention, and

Fig 10 shows the same parameters as in figure 9 during a time series with a fluctuating wind.

## Detailed description of the drawings

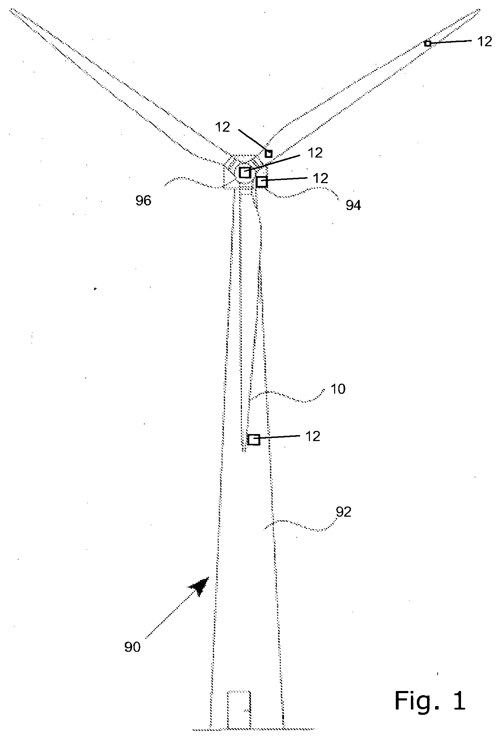

As shown in figure 1, a wind turbine 90 comprises a tower 92, a nacelle 94 at the tower top, the nacelle housing machine components, such as gearbox, generator etc. (not shown). At one end of the nacelle, a hub section 96 supports a plurality of wind turbine blades 10. The rotor of the wind turbine includes the blades and possibly other rotating parts such as the hub section 96. One or more measuring units 12 may be provided on the hub section 96, in or on the nacelle, in one or more of the blades 10, and in the tower 92. The measuring unit(s) 12 is/are arranged to measure one or more operational parameters representing a loading on the wind turbine rotor exerted by the wind, such as an acceleration of a component of the wind turbine, a load of a component of the wind turbine, a deflection of a component of the wind turbine, or a rotational speed of a component of the wind turbine. The load measurement may e.g. be a torque measurement at the hub or a stress in the blade root and carried out by suitable means, such as strain gauges, optical fibres etc. The acceleration measurement may be performed by means of an accelerometer arranged within the hub section, on the nacelle, or on the main shaft. The deflection measurement may be performed e.g. by an angle measurement device. The rpm measurement may conveniently be performed on the main shaft of the turbine or on a rotatable part within the hub section, to measure the rotational speed of the rotor. Alternatively, it may be performed by an instrument, which is independent of access to the main shaft of the wind turbine.

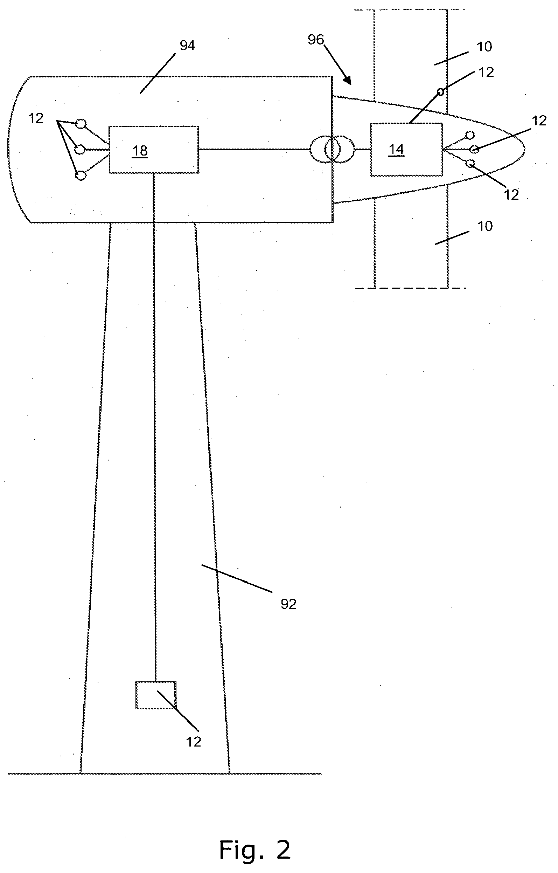

Figure 2 generally illustrates a control system of an embodiment of a wind turbine according to the invention. The wind turbine comprises one or more controllers such as a nacelle-hosed controller 18 within the nacelle 94 and a hub-sided controller 14 and in communication with each other via an interface between the stationary and the rotating parts. The controllers 14, 18 receive input from the set of sensors or measuring units 12 placed in different parts of the wind turbine such as in the nacelle, in the blades or the tower. The measuring units 12 may provide input data to the nacelle-housed controller 18 related to e.g. power output of the wind turbine, wind direction, wind velocity and/or other parameters. The hub-sited control circuitry 14 receives input data from a plurality of measuring units 12 arranged to measure e.g. loads on the blades 10 (i.e. blade bending), blade oscillation, rpm, acceleration, velocity or load of the tower 92 and/or other parameters. The sensors 12 may be provided for individual purposes, or some of them may replicate others. For example, two of the sensors 12 may be provided for measuring blade load, whereby one of the sensors 12 is provided to take over if the other fails. The control system comprises a pitch controller for determining the pitch reference value for controlling the pitch of the blades 10. The input from the measuring units 12 is processed in a processor in one or more of the controllers to yield the operational parameter (such as the thrust coefficient or the minimum pitch limit value) and the variation parameter, and thereby determine whether or not a modified control strategy should be followed which is then communicated to the pitch controller. The pitch controller is then configured to optionally modify the otherwise decided pitch reference and control the pitch of the turbine blades accordingly.

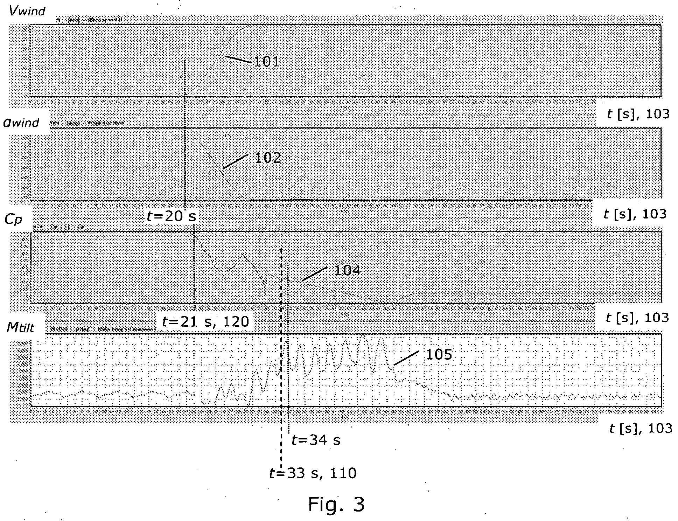

Figure 3 shows at the two uppermost curves the absolute wind speed $V_{wind}$, 101 and the wind direction $a_{wind}$, 102 as a function of time $t$, 103 during a wind load condition case. This specific case illustrates the wind parameters during an Extreme Coherent gust with Direction change load case (ECD) as prescribed in the IEC 61400 code which comprises a range of extreme wind load conditions typically considered in the design of a wind turbine to assure its structural integrity. As can be seen from the curves, the wind direction 102 and speed 101 changes rather abruptly from around $t$=20 s and the following 10 seconds.

The two lowermost curves show the rotor power coefficient $Cp$, 104 and the tilt moment $M_{tilt}$, 105 for a pitch regulated variable speed wind turbine with a conventional yaw system based on wind vane measurements during and resulting from the extreme wind speed and direction change.

The rotor power coefficient $Cp$ is defined as the ratio of the actual power output of the turbine to the power present in the free stream of a fluid flowing through the same cross-sectional area:

$$C_p = \frac{P}{\frac{1}{2}\rho V^3 A},$$

where $P$ is the rotor power, $\rho$ is the air density, $V$ is the wind speed, and $A$ is the rotor swept area.

The rotor power coefficient $Cp$, 104 can hence be calculated and estimated continuously based on the wind speed and the produced rotor power by the wind turbine as known by a person skilled in the art. The wind speed may be measured e.g. through a nacelle mounted anemometer (mechanical based or ultrasonic), or may be estimated e.g. through hub or blade mounted pressure probes.

The rotor power coefficient may be determined at the same time as determining an estimate for the wind speed from the below equation:

$$f(v) = \frac{1}{2}\rho A_R C_P (\theta, \frac{\omega_R R}{v_{est}}) v_{est}^3 - P_{ROT} = 0,$$

This method involves the measurements of the pitch angle $\theta$, the rotor speed $\omega_R$, and the rotor power $P_{ROT}$ (generator output estimated mechanical and electrical drive train losses plus acceleration power). The wind speed may then be found by solving the equation in an iterative process as the rotor power coefficient in each iteration step may be determined from look-up tables as a function of the pitch and the tip speed ratio $\lambda = \frac{\omega_R R}{v}$ (and hence as a function of the current wind speed estimate).

The rotor torque coefficient $CQ$ is related to the rotor power coefficient as:

$$C_p = \lambda C_Q,$$

where $\lambda$ is the tip-speed ratio of the turbine. The control method according to the invention and as described in details in the following may hence in general be based equally well on the rotor torque coefficient instead of on the rotor power coefficient.

The tilt moment $M_{tilt}$, 105 is a load moment about an axis which is substantially perpendicular to a longitudinal direction defined by the tower construction of the wind turbine, and substantially perpendicular to an axis defined by a main axle of the drive train of the wind turbine. From figure 3 it appears that very high loading (considerably higher than during normal operation) occurs around $t$=34 s and later.

The high tilt moments may arise for instance due to the generator speed-based pitch control being a relatively slow-acting system unable to follow the steep slopes of the wind speed, or not being designed to react on fast changing wind conditions. Therefore, the thrust coefficient may not be lowered fast enough to compensate for the increased wind speed. As a result, the tower is deflected backwards with the result of excessive tilt moments and bending moments in the tower base. Further, a tilt-yaw controller on the wind turbine may not react fast enough to be able to compensate for the abrupt change in the wind direction resulting in unbalanced loads and moments, and stationary yaw errors leading to the wind turbine being stopped. Similarly, the yaw moments of the hub (i.e. a load moment about an axis which is substantially parallel to and coinciding with a longitudinal direction defined by the tower construction of the wind turbine) may be excessive in extreme wind conditions as described here.

In the load case shown in figure 3, a yaw error supervision according to known methods, where any wind direction changes are detected from wind vane measurements, is seen to trigger the alarm causing the stopping of the wind turbine to be initiated at around $t$ = 33 s, 110. As can be seen from the lowermost moment curve this is however too late to avoid the large tilt moments $M_{tilt}$, firstly as the tilt moments are already excessive at this time, and secondly as the stopping process in itself takes some time to take effect.

However, the change in the wind condition parameters can be seen from figure 3 to be reflected in the rotor power coefficient $Cp$ 104 already from around $t$=21 s, 120, where the coefficient starts decreasing. This effect is exploited in the controlling method according to an embodiment of the invention to improve the operation of the wind turbine, as will be described in more details in the following.

According to one embodiment of the invention, the controlling strategy of the wind turbine is modified in case a variation parameter $Avar$ being a function of the rotor power coefficient and reflecting a variation hereof over time becomes larger than some alert threshold $T$. The variation parameter $Avar$ may in one embodiment be determined as the difference between the slow and the fast low pass filtered rotor power coefficient; $Avar = Cp_{slow} - Cp_{fast}$.

As long as the variation parameter does not reach or exceed the alert threshold, the control and operation of the wind turbine is not altered, and the wind turbine is controlled as otherwise determined and according to the control signals received from the one or more controllers, such as power or torque reference signals for controlling the rotational speed of the wind turbine rotor, or pitch reference signals for controlling the pitching of one or more of the wind turbine blades. The modified control strategy initiated by the variation parameter exceeding the alert threshold may for instance comprise stopping the wind turbine (e.g. by braking or pitching the blades out of the wind according to some stopping strategy), or de-rating the turbine. A de-rating control strategy may e.g. include a reduction of the power reference, a reduction of the rotational speed, collective blade pitching out of the wind (optionally combined with individual pitching of the blades) or a combination of two or three of these control schemes. Alternatively or additionally the modified control strategy may comprise adding a modification parameter to the control signal such as for instance increasing the pitch by a certain extra amount.

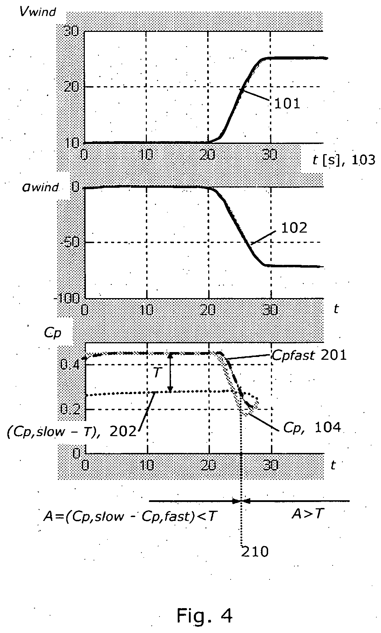

This strategy is illustrated in figure 4 showing the earliest part of the same wind load case as in figure 3, with the wind speed $V_{wind}$, 101 and wind direction $a_{wind}$, 102 as a function of time $t$, 103. One of the curves below show the rotor power coefficient $Cp$, 104 in a solid thick line as also shown in figure 3, and resulting from the wind load condition parameters during normal operation of the wind turbine and estimated or calculated directly or indirectly from the wind turbine power and wind speed as previously described. In a thinner dashed line is shown the rotor power coefficient filtered with a fast low pass filter $Cp_{fast}$, 201, while the dotted line 202 shows the rotor power coefficient filtered with a slow low pass filter and minus an alert threshold; ($Cp_{slow}-T$), 202. In this embodiment the alert threshold $T$ is a predefined constant equal to $T= 0.15$.

According to one embodiment of the invention, the controlling of the wind turbine is modified in case a variation parameter $Avar$ being a function of the rotor power coefficient and reflecting a variation hereof over time becomes larger than some alert threshold $T$. The variation parameter $Avar$ is in one embodiment and as illustrated in figure 4 determined as the difference between the slow and the fast low pass filtered rotor power coefficient; $Avar = Cp_{slow} - Cp_{fast}$.

Under these wind conditions illustrated in figure 4, the variation of the rotor power coefficient in time causes the modified control strategy to be initiated at t = 25 s, 210, where the curve of the fast filtered $Cp_{fast}$, 201 drops below the curve of the slow filtered value $Cp_{slow}$ minus the fixed value of the alert threshold $T$, 202, whereby the variation parameter $Avar$ hence becomes larger than the alert threshold, $Avar > T$.

The filtering applied on the rotor power coefficient is in this case a 1st order recursive low pass filter with a user specified time constant:

$$Y_{filt,n} = Y_{filt,n-1}\left(1 - \frac{\Delta t}{\tau}\right) + Y_n \frac{\Delta t}{\tau}$$

, were $\tau$ [s] is the filter time constant, $\Delta t$ [s] = sampling time step, $Y_n$ is the signal to be filtered and $Y_{filt,n}$ is the filtered signal and $n$ is the sample step number. The speed of the filter (fast or slow) is determined by the magnitude of the time constant. In this embodiment the slow averaging is done using a first order low pass filter on $Cp$ with a time constant of 30 s. The fast averaging is done using the same filter with a time constant of 1 s.

In other embodiments the time dependent variation of the rotor power coefficient may be determined by applying other types of filters such as filters of higher order, a Kalman filter or by the application of Fast Fourier transformation. The time dependent variation may further be determined as a function of the standard deviation and/or a mean value of the operational parameter.

The time intervals at which the operational parameter and its variation are determined may vary according to need and can for instance be determined continuously or at varying interval lengths dependent for instance on the turbulence conditions, on the current wind direction, on the ambient temperature etc.

The alert threshold which in the shown examples of figure 4-6 is preset to a constant of $T=0.15$ may be chosen e.g. from simulations that is obtained from the wind turbine that is not stopped or de-rated neither too early i.e. under non-critical wind load conditions, nor too late to avoid any extreme loads and moments on the wind turbine components.

The alert threshold may be chosen as a function of parameters directly or indirectly indicating the severity of the wind load condition or load conditions of the turbine, such as for example the current wind speed and wind direction, a turbulence factor, or e.g. current loads or moments in some of the wind turbine components, or the current pitching or pitching history. For instance, an alert threshold $T$ may be used depending on the current pitch of the blades. In case the blades are pitched more into the wind, a relatively sudden change in the wind load conditions would cause higher loads on the rotor blades than if the blades were initially pitched out of the wind. Therefore, an alert threshold $T$ could advantageously be expressed as a function of the pitch such that the control strategy of the wind turbine would be more likely to be altered or modified (a lower $T$) e.g. by stopping or de-rating, when the risk of intolerable loads caused by changes in the wind conditions is higher.

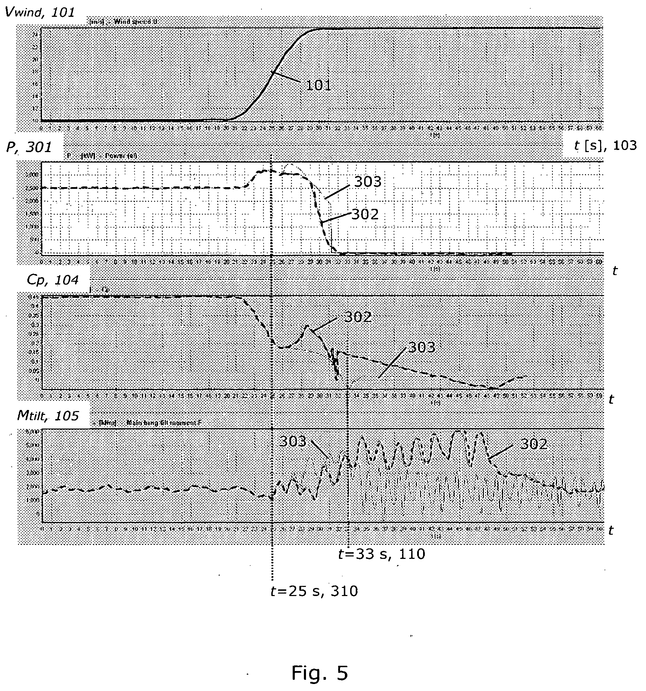

Figure 5 shows, from the top, the wind speed 101, the electrical power on the generator side P 301, rotor power coefficient $Cp$ 104, and the tilt moment $M_{tilt}$ 105 as a function of time $t$, 103, and during the same wind load condition of wind speed and direction change as previously illustrated in the figures 3 and 4. The dashed thick lines 302 for the power, rotor power coefficient, and tilt moment show the parameters without the control method according to the present invention resulting in high tilt moments occurring even though a yaw error supervision according to prior art causes stopping of the wind turbine to be initiated around $t=33$ s, 110. The solid thin lines 303 show the simulated results resulting from the control method according to one embodiment of the invention as described above, and where the use of the time dependent variation of the rotor power coefficient as an indicator for a large change in the wind conditions causes a modified control strategy to be initiated around $t=25$ s, 310, from where the turbine is stopped. The stopping based on the rotor power coefficient is hence initiated 8 seconds earlier than by the conventional control method based on yaw error supervision from wind vane measurements. As can be seen from the figure, the stopping is thereby initiated sufficiently early to avoid the otherwise resulting large tilt moments.

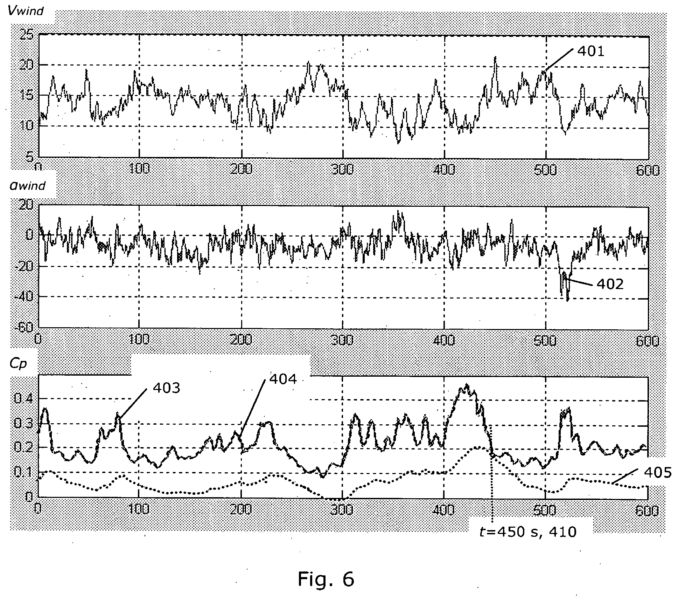

Figure 6 shows a time series with normal production and with the control method implemented according to the above. The wind speed 401 and the wind direction 402 as a function of time are shown in the two first curves, which wind load conditions result in the rotor power coefficient by the solid (grey) line in the lowermost curve 403. In a black dashed line is shown the rotor power coefficient filtered with a fast lowpass filter $Cp_{fast}$, 404 and which is nearly coinciding with the unfiltered $Cp$. The dotted line 405 shows the rotor power coefficient filtered with a slow lowpass filter and minus an alert threshold; ($C_{P,slow}-T$) similar to the curves in figure 4.

It can be seen from figure 6 that under these wind conditions, the variation parameter $Avar = Cp_{slow} - Cp_{fast}$ does not exceed the alert threshold $T$, i.e. the curve of the fast filtered $Cp_{fast}$, 404 does not come below the curve of the slow filtered value $Cp_{slow}$ minus the fixed value of the alert threshold $T$, 405, although it is close around $t=450$ s, 410. Thus, the modified control strategy of e.g. stopping or de-rating the wind turbine is not triggered during this normal operation of the wind turbine, which is advantageous as the power production of the wind turbine is hence not lowered unnecessarily.

As previously mentioned, the variation parameter *Avar* may alternatively or additionally be determined based on the rotor torque coefficient of the wind turbine due to its direct relationship to the rotor power coefficient via the tip-speed ratio $\lambda$.

In a further embodiment of the invention, the variation parameter *Avar* is determined based on the estimated thrust force $F_T$ on the wind turbine rather than, or in addition to the rotor power coefficient. The thrust $F_T$ may be determined or estimated from the wind speed, the pitch angle and the rotor or generator rotational speed. In general it may be shown that the thrust decreases with increasing pitch angles.

Similarly, the variation parameter *Avar* may be determined based on the thrust coefficient of the wind turbine rather than, or in addition to the rotor power coefficient. The thrust coefficient $C_t$ is the relative speed of each blade and the angle of attack that produces the lift from each blade and is defined as:

$$C_T = \frac{F_T}{\frac{1}{2}\rho V^2 A},$$

where $F_T$ is the aerodynamic thrust on the rotor, $\rho$ is the air density, $V$ is the wind speed, and A is the rotor swept area. The thrust may e.g. be estimated from the rotor power, the rotor and/or generator speed, the pitch of the blades, and optionally based on look-up tables.

From figure 6, it can be seen that the rotor power coefficient $Cp$ seems to be sensitive not only to the wind direction changes but also to the variation in the wind speed. The rotor power coefficient in general seems to fluctuate more at lower wind speeds. A similar effect is seen on the thrust coefficient. The variation parameter *Avar* may therefore in embodiments of the invention also be expressed as a function of other sensor signals or measured parameters such as the current wind speed, the pitch of the blades, the drive train speed, or the acceleration of the nacelle. Thereby a better tuning of the variation parameter may be obtained and a higher confidence that the modified control strategy is not initiated during normal operation of the wind turbine

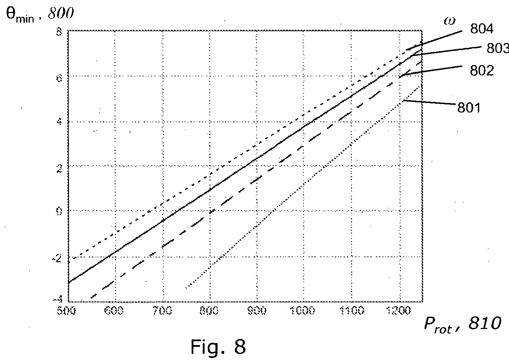

According to an embodiment of the invention, the operational parameter may be chosen as the pitch limit $\theta_{min}$ ensuring that the thrust on the wind turbine is below a specified maximum allowable limit $F_{t,max}$. The pitch limit therefore is similar to e.g. the aerodynamic thrust which represents the loading on the wind turbine as exerted by the wind. This pitch limit is also referred to as the thrust limiter pitch. It can be shown that the pitch angle $\theta_{min}$, 800 for a given thrust value may be expressed as a linear function of the rotor power $P_{rot}$ 810 as illustrated in figure 8. Here, the minimum pitch 800 corresponding to a certain fixed maximum allowable thrust is shown as a function of the rotor power $P_{rotor}$, 810 and for 4 different values of rotational speed of the rotor $\omega$, 801, 802, 803, 804. The rotor rotational speed increases for increasing pitch at a given rotor power. Such relationship may be determined for different values of rotor thrust $F_{t,max}$ from which a minimum pitch limit $\theta_{min}$ 800 may then be determined based on information of the generator power $P_{generator}$, 810 and the rotational velocity of the rotor co, 801-804 by interpolation. The rotor power may be determined from data on the generator power and the rotor rotational speed.

As outlined above, a thrust limiter pitch may be determined such that a certain maximum acceptable and allowable thrust is not exceeded. The maximum rotor thrust $F_{t,max}$ may be set at a predefined and/or constant level. Alternatively or additionally, the maximum rotor thrust $F_{t,max}$ may be variable and determined continuously or for certain time periods as the maximum acceptable thrust under the given wind conditions in order not to cause too high wear and fatigue on the wind turbine thereby reducing its life time while on the same time obtaining the desired power production over time. The maximum allowable rotor thrust $F_{t,max}$ may be determined from look-up tables or curves which have been predetermined e.g. during the designing of the wind turbine from simulations and in dependence of e.g. the current mean wind speed, the variation of the turbine blade loads, and/or the variation of the rotor acceleration.

The variation parameter *Avar* may be determined as the difference between the current value of the operational parameter (i.e. the thrust limiter pitch in this embodiment), and the sum of the mean value and a constant times the standard deviation of the operational parameter: $Avar = \theta_{min} - \theta_{min,avg} - k\theta_{min,std}$, where k may be some predetermined constant. The variation parameter in this way reflects a sudden or abrupt change of the operational parameter expressing whether the thrust limiter pitch angle deviates or changes significantly relative to previous values.

The variation parameter may in an embodiment be determined only as a function of the standard deviation or the mean value of the thrust limiter pitch, or may be determined e.g. as the difference between the change in the operational parameter in two successive time steps and the standard deviation (optionally times a constant).

In case the repeatedly estimated variation parameter becomes larger than the alert threshold, *Avar >T*, the modified control strategy is initiated. The modified control strategy may comprise adding a pitch contribution $\Delta\theta$ (a modification parameter) to the pitch reference.

Alternatively or additionally, the modified control strategy may imply adding a pitch contribution to the thrust limiter pitch, which may be used as the resulting pitch reference, in the cases where the otherwise determined pitch reference is below the thrust limiter pitch $\theta_{min}$. By such modification to the pitch, the turbine blades are pitched out of the wind fast and hence effectively reducing the effective thrust force exerted on the rotor and thereby on the tower.

This modification strategy of only increasing the thrust limiter pitch in the specific situations of large and sudden changes to the operational parameters has proven advantageous over other strategies trying to increase the dynamics of the thrust limiter action (for example by implementing a lead compensator on the thrustlimiter pitch angle) in that the noise in the thrust limiter pitch by the proposed method is kept at a relatively low level. This is particularly advantageous in turbulent wind load conditions and during gusty wind events where the thrust limiter is highly active (i.e. the pitch reference is often modified to the minimum pitch limit), as an increase in the noise may otherwise result in increased fatigue loads on pitch system, blades and tower. In comparison hereto the proposed control method is advantageous as it has no influence on the normal thrustlimiter operation, but will add dynamics to the thrustlimitation during extreme events.

The modification parameter added to the control signal value may be tuneable for example depending on the current wind speed, such that the blades may be pitched out of the wind faster at higher wind speeds where the tower bending moments would otherwise be relatively higher than at lower wind speeds.

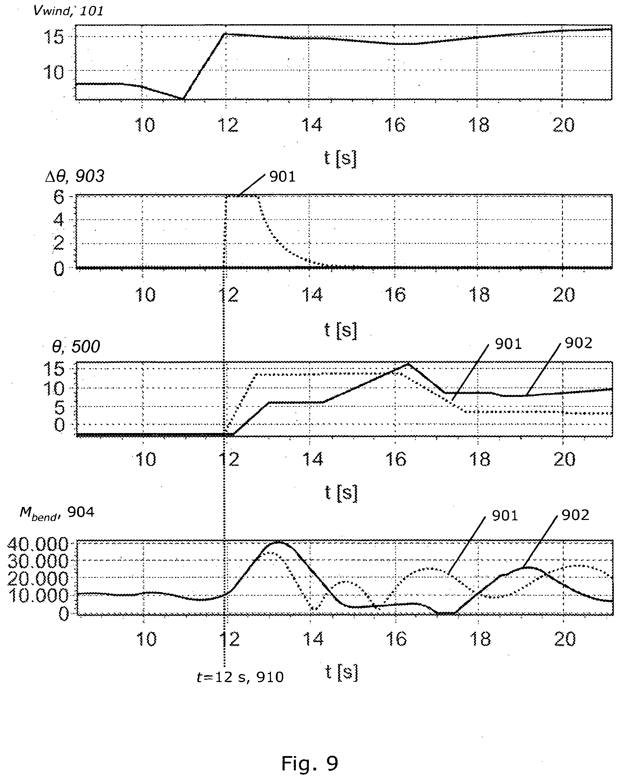

Figure 9 shows a time series with, 901 and without, 902 the control method implemented according to the above and during a simulation of a wind gust. The wind speed 101 as a function of time $t$ is shown in the first curve, which wind load condition results in the pitch reference $\theta$, 500 (the control signal) and the tower bottom bending moments $M$, 904 as shown in the two lowermost curves with (dotted lines 901) and without (solid lines 902) implementing the modified control strategy according to the invention.

As described previously, the proposed control method only actively affects the control signal(s) such as the pitch reference in the situations where the large and sudden changes to the operational parameter such as the thrust limiter pitch or thrust coefficient are detected. It can be seen from figure 9 that the proposed control method of modifying the pitch is not active in the first time period until approximately $t{\sim}12$ s, as the pitch reference 500 for the two different control methods are here the same. At the time $t{\sim}12$ s large variations in the thrust limiter pitch (not shown) causes a change in pitch $\Delta\theta$, 903 (modification parameter) to be added to the otherwise determined pitch reference. This modification of the pitch reference results in considerably lower tower bottom bending moments as can be seen from the lowermost curve although the modified control strategy is only active and the pitch reference is modified for a very short period of time of around *12 s <t< 14 s.* Further, as can be seen from the curve showing the modification parameter $\Delta\theta$, 903 the pitch in this embodiment is modified by a tuneable or variable parameter, where the pitch is initially increased by 6° and thereafter by a exponentially decreasing amount over the following time period of approximately one second.

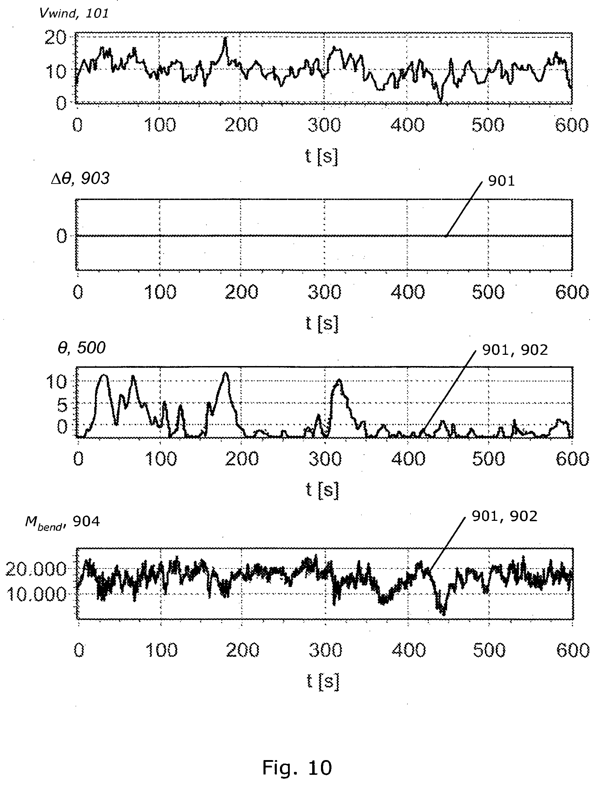

Figure 10 illustrates the same parameters as in figure 9 resulting from a simulation of the wind turbine behaviour during a time series of extreme turbulence with significant but constant level of wind fluctuations. Although the wind fluctuation magnitudes in this test run are considerable, the fluctuations are not out of the ordinary in the present situation and therefore do not result in sudden or abrupt changes in the thrust limiter pitch which is here used as the operational parameter, and therefore the control strategy is not activated at any times ($\Delta\theta=0$). This illustrates how the proposed strategy is advantageously only reacting in on out of the ordinary situations and not merely on fluctuations.

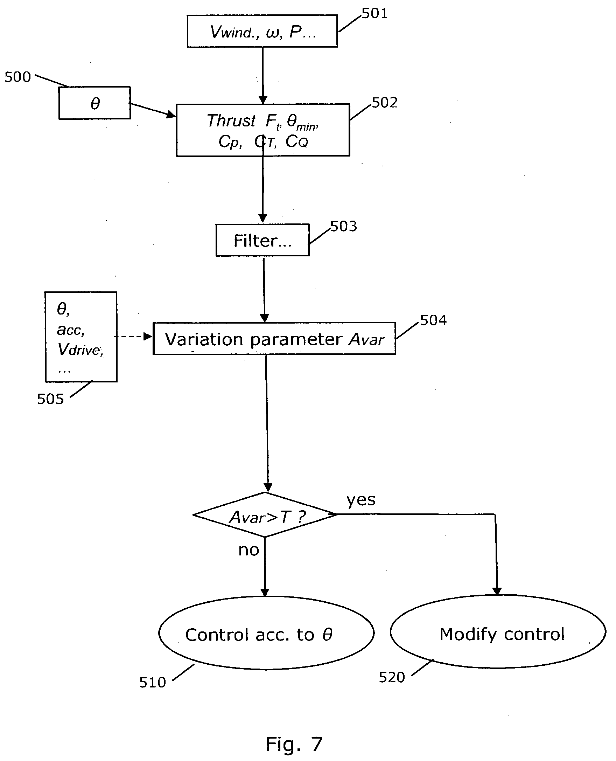

The control method according to the invention is illustrated step-by-step in the flowchart in figure 7 and as applied to a pitch control parameter. As before, the principle is however the same for other controllable parameters such as for control signals comprising the power reference etc. In each time step and for each sample, a new control signal $\theta$ is received from another controller or determined locally, 500. Similarly information is received or obtained on the current rotor or generator power $P$ and other wind turbine parameters such as the tip speed ratio, the wind speed *Vwind,* etc, 501. From these parameters the current operational parameter is then determined which as previously discussed is a parameter representing the loading on the wind turbine such as e.g. the thrust $F_t$, the thrust limiter pitch $\theta_{min}$, the rotor power coefficient $C_p$, rotor torque coefficient $C_Q$, and/or the thrust coefficient $C_T$, 502. The variation parameter *Avar* reflecting a variation of the operational parameter is then determined 504 e.g. from the standard deviation and/or the variance or mean of the parameter, from a rain flow count algorithm, by filtering, or by similar data processing measures reflecting the fluctuation of the parameter over time. The variation parameter may alternatively or additionally also be determined as a function of other current parameters such as the current pitch angle, the wind speed, the drive train speed $V_{drive}$, the blade loads, tower acceleration *acc* etc., 505. In case the variation parameter *Avar* does not exceed the alert threshold T (which may be a predefined constant or a function of current operating conditions such as the current wind speed) the wind turbine is controlled according to the control signal $\theta$ 500 without any intervention 510.

If, on the other hand, the variation parameter *Avar* exceeds the alert threshold *T,* the present control strategy is overruled and the wind turbine is controlled according to a modified control strategy, 520. The modified control strategy may as previously mentioned for instance involve stopping the wind turbine, slowing the wind turbine down, or continue to control the wind turbine according to the previous or an even earlier control signal. The modified control strategy may likewise comprises increasing the thrust limiter pitch $\theta_{min}$ and/or the pitch reference $\theta$, 500 by certain amount $\Delta\theta$.

The control method may involve storing the information on the operational parameter such as the rotor power coefficients and/or thrust coefficients optionally together with information on the associated control signals in a control history. Therefore, there is a possibility of letting the variation parameter *Avar* be a more complex function of the operational parameters, and control signals in the control history, such as depending on for instance the second derivatives or higher of the parameters.

While preferred embodiments of the invention have been described, it should be understood that the invention is not so limited and modifications may be made without departing from the invention. The scope of the invention is defined by the appended claims, and all devices that come within the meaning of the claim are intended to be embraced therein.

**Claims**

1.  A method of controlling a wind turbine having a rotor with pitchable wind turbine blades and a generator for producing power, the method comprising the steps of:

    determining a control signal for a controllable parameter of the wind turbine;
    estimating at time intervals at least one operational parameter representing a loading on the wind turbine exerted by the wind, where the step of estimating the operational parameter comprises estimating at least one of a rotor power coefficient, a torque coefficient, a thrust coefficient of the wind turbine, and/or a thrust limiter pitch angle, and wherein the thrust limiter pitch angle comprises the minimum pitch angle for maintaining the thrust on the wind turbine to be equal or below a maximum allowable thrust level;
    determining a variation parameter reflecting a variation of said operational parameter over time;
    controlling the wind turbine according to the control signal only if the variation parameter is below an alert threshold; and
    controlling the wind turbine according to a modified control strategy if the variation parameter is above the alert threshold.

2.  A method of controlling according to claim 1, where the modified control strategy comprises at least one of stopping, de-rating the wind turbine and adding a modification parameter to the value of the control signal.

3.  A method of controlling according to claim 2, where the control signal comprises a pitch reference signal for controlling the pitching of the blades of the wind turbine, and the modified control strategy comprises increasing the value of the pitch reference signal.

4.  A method of controlling according to claim 2 or 3, where the modification parameter is a predetermined constant.

5.  A method of controlling according to any of the preceding claims, where said at least one operational parameter is determined from at least one of a rotor speed, a generator speed of the wind turbine, and the wind speed.

6.  A method of controlling according to claim 1, where said at least one of the rotor power coefficient, the torque coefficient, and the thrust coefficient is determined from a pitch angle of one or more of the wind turbine blades.

7.  A method of controlling according to any of the preceding claims, where the variation parameter is determined as a function of the difference between a fast and a slow low pass filtered operational parameter.

8.  A method of controlling according to any of the preceding claims, where the variation parameter is determined as a function of at least one of the mean value and the standard deviation of operational parameter.

9.  A method of controlling according to any of the preceding claims, where the variation parameter is determined as a function of a pitch angle of one or more of the wind turbine blades, of the acceleration of the wind turbine tower, and/or of the drive train speed of the wind turbine.

10. A method of controlling according to any of the preceding claims, where the alert threshold is a predefined constant.

11. A method of controlling according to any of the preceding claims, where the alert threshold is a function of the wind speed.

12. A control system for a wind turbine having a rotor with pitchable wind turbine blades and a generator for producing power, the control system configured to perform the steps of:

determining a control signal for a controllable parameter of the wind turbine;
estimating at time intervals at least one operational parameter representing a loading on the wind turbine exerted by the wind, where the step of estimating the operational parameter comprises estimating at least one of a rotor power coefficient, a torque coefficient, a thrust coefficient of the wind turbine, and/or a thrust limiter pitch angle, and wherein the thrust limiter pitch angle comprises the minimum pitch angle for maintaining the thrust on the wind turbine to be equal or below a maximum allowable thrust level;
determining a variation parameter reflecting a variation of said operational parameter over time;
controlling the wind turbine according to the control signal only if the variation parameter is below an alert threshold; and
controlling the wind turbine according to a modified control strategy if the variation parameter is above the alert threshold.

13. A wind turbine having a rotor with pitchable wind turbine blades and a generator for producing power and comprising a measuring unit placed in relation to the rotor so as to measure at time intervals at least one operational parameter representing a loading on the wind turbine rotor exerted by the wind, the wind turbine further comprising a control system according to claim 12 comprising a controller for determining a control signal for a controllable parameter of the wind turbine, a processor for determining said at least one operational parameter as measured by the measuring unit, and for determining a variation parameter reflecting a variation of said operational parameter over time, and where the controller is further configured for controlling the wind turbine according to the control signal only if the variation parameter is below an alert threshold, and according to a modified control strategy if the variation parameter is above the alert threshold.

**Patentansprüche**

1. Ein Verfahren zum Steuern einer Windturbine mit einem Rotor mit verstellbaren Windturbinenblättern und einem Generator zum Erzeugen von Energie, das Verfahren umfassend die Schritte:

Bestimmen eines Steuersignals für einen steuerbaren Parameter der Windturbine;
Abschätzen in Zeitintervallen von zumindest einem Betriebsparameter, der eine durch den Wind ausgeübte Belastung an der Windturbine repräsentiert, wobei der Schritt des Abschätzens des Betriebsparameters Abschätzen von zumindest einem von einem Rotor-Leistungskoeffizienten, einem Torsionskoeffizienten, einem Schubkraftkoeffizienten der Windturbine und/oder einem Schubkraftbegrenzungssteigungswinkel umfasst, und wobei der Schubkraftbegrenzungssteigungswinkel einen minimalen Steigungswinkel zum Aufrechterhalten der Schubkraft an der Windturbine auf oder unter einem maximal erlaubten Schubkraftniveau umfasst;
Bestimmen eines Veränderungsparameters, der eine zeitliche Veränderung des genannten Betriebsparameters wiedergibt;
Steuern der Windturbine entsprechend des Steuersignals, nur wenn der Veränderungsparameter unter einer Alarmschwelle ist; und
Steuern der Windturbine entsprechend einer modifizierten Steuerungsstrategie, wenn der Veränderungsparameter über der Alarmschwelle ist.

2. Ein Verfahren zum Steuern nach Anspruch 1, wobei die modifizierte Steuerungsstrategie zumindest eines von Abschalten, Drosseln der Windturbine und Hinzufügen eines Modifikationsparameters zu dem Wert des Steuersignals umfasst.

3. Ein Verfahren zum Steuern nach Anspruch 2, wobei das Steuersignal ein Steigungsbezugssignal zum Steuern des Instellungbringens der Blätter der Windturbine umfasst und die modifizierte Strategie Erhöhen des Wertes des Steigungsbezugssignals umfasst.

4. Ein Verfahren zum Steuern nach einem der Ansprüche 2 oder 3, wobei der Modifikationsparameter eine vorbestimmte Konstante ist.

5. Ein Verfahren zum Steuern nach einem der vorhergehenden Ansprüche, wobei der genannte zumindest eine Betriebsparameter bestimmt wird von zumindest einem von einer Rotorgeschwindigkeit, einer Generatorgeschwindigkeit der Windturbine und der Windgeschwindigkeit.

**6.** Ein Verfahren zum Steuern nach Anspruch 1, wobei der genannte zumindest eine von Rotor-Leistungskoeffizient, Torsionskoeffizient und Schubkraftkoeffizient von einem Steigungswinkel eines oder mehrerer der Windturbinenblätter bestimmt wird.

**7.** Ein Verfahren zum Steuern nach einem der vorhergehenden Ansprüche, wobei der Veränderungsparameter als eine Funktion der Differenz zwischen einem schnellen und einem langsamen tiefpassgefilterten Betriebsparameter bestimmt wird.

**8.** Ein Verfahren zum Steuern nach einem der vorhergehenden Ansprüche, wobei der Veränderungsparameter als eine Funktion von zumindest einem von dem Mittelwert und der Standardabweichung des Betriebsparameters bestimmt wird.

**9.** Ein Verfahren zum Steuern nach einem der vorhergehenden Ansprüche, wobei der Veränderungsparameter als eine Funktion von einem Steigungswinkel eines oder mehrerer der Windturbinenblätter, der Beschleunigung des Windturbinenturmes und/oder der Geschwindigkeit des Antriebsstrangs der Windturbine bestimmt wird.

**10.** Ein Verfahren zum Steuern nach einem der vorhergehenden Ansprüche, wobei die Alarmschwelle eine vorbestimmt Konstante ist.

**11.** Ein Verfahren zum Steuern nach einem der vorhergehenden Ansprüche, wobei die Alarmschwelle eine Funktion der Windgeschwindigkeit ist.

**12.** Ein Steuersystem für eine Windturbine mit einem Rotor mit verstellbaren Windturbinenblättern und einem Generator zum Erzeugen von Energie, das Steuersystem konfiguriert, um die Schritte auszuführen:

Bestimmen eines Steuersignals für einen steuerbaren Parameter der Windturbine;
Abschätzen in Zeitintervallen von zumindest einem Betriebsparameter, der eine durch den Wind ausgeübte Belastung an der Windturbine repräsentiert, wobei der Schritt des Abschätzens des Betriebsparameters Abschätzen von zumindest einem von einem Rotor-Leistungskoeffizienten, einem Torsionskoeffizienten, einem Schubkraftkoeffizienten der Windturbine und/oder einem Schubkraftbegrenzungssteigungswinkel umfasst, und wobei der Schubkraftbegrenzungssteigungswinkel einen minimalen Steigungswinkel zum Aufrechterhalten der Schubkraft an der Windturbine auf oder unter einem maximal erlaubten Schubkraftniveau umfasst;
Bestimmen eines Veränderungsparameters, der eine zeitliche Veränderung des genannten Betriebsparameters wiedergibt;
Steuern der Windturbine entsprechend des Steuersignals, nur wenn der Veränderungsparameter unter einer Alarmschwelle ist; und
Steuern der Windturbine entsprechend einer modifizierten Steuerungsstrategie, wenn der Veränderungsparameter über der Alarmschwelle ist.

**13.** Eine Windturbine mit einem Rotor mit verstellbaren Windturbinenblättern und einem Generator zum Erzeugen von Energie und umfassend eine Messeinheit, die bezogen auf den Rotor angeordnet ist, um in Zeitintervallen zumindest einen Betriebsparameter, der eine durch den Wind ausgeübte Belastung an der Windturbine repräsentiert, zu messen, die Windturbine weiterhin umfassend ein Steuersystem nach Anspruch 12 umfassend eine Steuerung zum Bestimmen eines Steuersignals für einen steuerbaren Parameter der Windturbine, einen Prozessor zum Bestimmen des genannten zumindest einen Betriebsparameters, wie von der Messeinheit gemessen, und zum Bestimmen eines Veränderungsparameters, der eine zeitliche Veränderung des genannten Betriebsparameter wiedergibt, und wobei die Steuerung weiterhin konfiguriert ist zum Steuern der Windturbine entsprechend des Steuersignals, nur wenn der Veränderungsparameter unter einer Alarmschwelle ist, und entsprechend einer modifizierten Steuerungsstrategie, wenn der Veränderungsparameter über der Alarmschwelle ist.

**Revendications**

**1.** Procédé de commande d'une éolienne ayant un rotor avec des pales d'éolienne inclinables et un générateur pour produire de l'énergie, le procédé comprenant les étapes consistant à :

déterminer un signal de commande pour un paramètre ajustable de l'éolienne ;
estimer à intervalles de temps au moins un paramètre opérationnel représentant une charge sur l'éolienne exercée par le vent, où l'étape d'estimation du paramètre opérationnel comprend l'estimation d'au moins l'un ou l'autre d'un coefficient de puissance de rotor, d'un coefficient de couple, d'un coefficient de poussée de l'éolienne et/ou d'un angle d'inclinaison limiteur de poussée, et dans lequel l'angle d'inclinaison limiteur de poussée comprend l'angle d'inclinaison minimal pour maintenir la poussée sur l'éolienne afin qu'elle soit égale ou inférieure à un niveau de poussée autorisé maximal ;

déterminer un paramètre de variation reflétant une variation dudit paramètre opérationnel au fil du temps ;

commander l'éolienne selon le signal de commande uniquement si le paramètre de variation se situe en dessous d'un seuil d'alerte ; et

commander l'éolienne selon une stratégie de commande modifiée si le paramètre de variation se situe au-dessus du seuil d'alerte.

2. Procédé de commande selon la revendication 1, dans lequel la stratégie de commande modifiée comprend au moins l'une ou l'autre d'une situation d'arrêt, de déclassement de l'éolienne et d'addition d'un paramètre de modification à la valeur du signal de commande.

3. Procédé selon la revendication 2, dans lequel le signal de commande comprend un signal de référence d'inclinaison pour commander l'inclinaison des pales de l'éolienne et la stratégie de commande modifiée comprend l'augmentation de la valeur du signal de référence d'inclinaison.

4. Procédé de commande selon la revendication 2 ou la revendication 3, dans lequel le paramètre de modification est une constante prédéterminée.

5. Procédé de commande selon l'une quelconque des revendications précédentes, dans lequel ledit au moins un paramètre opérationnel est déterminé parmi au moins l'une ou l'autre d'une vitesse du rotor, d'une vitesse du générateur de l'éolienne et de la vitesse du vent.

6. Procédé de commande selon la revendication 1, dans lequel ledit au moins l'un ou l'autre du coefficient d'énergie du rotor, du coefficient de couple et du coefficient de poussée est déterminé à partir d'un angle d'inclinaison d'une ou plusieurs des pales de l'éolienne.

7. Procédé de commande selon l'une quelconque des revendications précédentes, dans lequel le paramètre de variation est déterminé en fonction de la différence entre un paramètre opérationnel de filtre passe-bas rapide et un paramètre opérationnel de filtre passe-bas lent.

8. Procédé de commande selon l'une quelconque des revendications précédentes, dans lequel le paramètre de variation est déterminé en fonction d'au moins l'un(e) ou l'autre de la valeur moyenne et de l'écart type du paramètre opérationnel.

9. Procédé de commande selon l'une quelconque des revendications précédentes, dans lequel le paramètre de variation est déterminé en fonction d'un angle d'inclinaison d'une ou plusieurs des pales d'éolienne, de l'accélération de la tour de l'éolienne et/ou de la vitesse du train d'entraînement de l'éolienne.

10. Procédé de commande selon l'une quelconque des revendications précédentes, dans lequel le seuil d'alerte est une constante prédéterminée.

11. Procédé de commande selon l'une quelconque des revendications précédentes, dans lequel le seuil d'alerte est fonction de la vitesse du vent.

12. Système de commande pour une éolienne ayant un rotor avec des pales d'éolienne inclinables et un générateur pour produire de l'énergie, le système de commande étant configuré pour effectuer les étapes consistant à :

déterminer un signal de commande pour un paramètre ajustable de l'éolienne ;

estimer à intervalles de temps au moins un paramètre opérationnel représentant une charge sur l'éolienne exercée par le vent, où l'étape d'estimation du paramètre opérationnel comprend l'estimation d'au moins l'un ou l'autre d'un coefficient de puissance de rotor, d'un coefficient de couple, d'un coefficient de poussée de l'éolienne et/ou d'un angle d'inclinaison limiteur de poussée, et dans lequel l'angle d'inclinaison limiteur de poussée comprend l'angle d'inclinaison minimal pour maintenir la poussée sur l'éolienne afin qu'elle soit égale ou inférieure à un niveau de poussée autorisé maximal ;

déterminer un paramètre de variation reflétant une variation dudit paramètre opérationnel au fil du temps ;

commander l'éolienne selon le signal de commande uniquement si le paramètre de variation se situe en dessous d'un seuil d'alerte ; et

commander l'éolienne selon une stratégie de commande modifiée si le paramètre de variation se situe au-dessus du seuil d'alerte.

13. Eolienne ayant un rotor avec des pales d'éolienne inclinables et un générateur pour produire de l'énergie et comprenant une unité de mesure placée par rapport au rotor de manière à mesurer à intervalles de temps au moins un paramètre opérationnel représentant une charge sur le rotor d'éolienne exercée par le vent, l'éolienne comprenant en outre un système de commande selon la revendication 12 comprenant un contrôleur pour déterminer un signal de commande pour un paramètre ajustable de l'éolienne, un processeur pour déterminer ledit au moins un paramètre opérationnel tel que mesuré par l'unité de mesure et pour déterminer un paramètre de variation reflétant une variation dudit paramètre opérationnel au fil du temps, et dans laquelle le contrôleur est encore configuré pour commander l'éolienne selon le signal de commande uniquement si le paramètre de variation se situe en dessous d'un seuil d'alerte et selon une stratégie de commande modifiée si le paramètre de variation se situe au-dessus du seuil d'alerte.

Fig. 1

Fig. 2

*V*wind

101

*t* [s], 103

*a*wind

102

*t* [s], 103

*Cp*                                    *t*=20 s

104

*t* [s], 103

*M*tilt                          *t*=21 s, 120

105

*t* [s], 103

*t*=34 s

*t*=33 s, 110

Fig. 3

Fig. 4

Fig. 5

Fig. 6

Fig. 7

Fig. 8

Fig. 9

Fig. 10

**EP 2 486 272 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090060740 A1